# FASCICULE DE BREVET EUROPEEN

(11) **EP 0 672 632 B1**
(45) Date de publication et mention de la délivrance du brevet: **17.12.1997**
(21) Numéro de dépôt: 95400528.6
(22) Date de dépôt: 13.03.1995
(51) Int. Cl.: C03C 8/14, C04B 41/86

(54) **Revêtement haute température, monocouche, sur substrat céramique et son obtention**
Hochtemperatur-Einzelschichtbekleidung auf keramischem Substrat und ihre Herstellung
High temperature monolayer coating on ceramic substrate and its production

(30) Priorité: 16.03.1994 FR 9403050
(43) Date de publication de la demande: 20.09.1995
(73) Titulaire: AEROSPATIALE Société Nationale Industrielle, 75781 Paris Cédex 16 (FR); VIAM ALL Russian Institut of Aviation Materials, 107005 Moscou (RU)
(72) Inventeur: Solovjeva, Galina Anatolievna, 125015 Moscou (RU); Tjurin, Vladimir Mihailovich, 129515 Moscou (RU); Solntsev, Stanislav Serguevich, 115558 Moscou (RU)
(74) Mandataire: Lepeudry-Gautherat, Thérèse

(56) Documents cités:
- US-A- 5 137 848
- DATABASE WPI Section Ch, Week 8813 Derwent Publications Ltd., London, GB; Class L, AN 88-090257 & SU-A-1 331 846 (I.B.BANKOVSKAY ET AL.) , 23 Août 1987

## Description

L'invention concerne des matériaux, plus précisément des revêtements, pour la protection des substrats céramiques, notamment poreux, contre l'érosion, les défaillances chimiques et les défaillances mécaniques.

Les matériaux céramiques fibreux à base d'oxydes réfractaires fonctionnant à des températures élevées sont largement utilisés. Les conditions d'utilisation de ces matériaux imposent des exigences aux revêtements utilisés pour leur protection : haute tenue en température, résistance à l'érosion, stabilité thermochimique et stabilité de phase élevées.

On connaît à présent toute une série de revêtements résistants à l'érosion qui fonctionnent à des températures allant jusqu'à 1260°C. On connaît un revêtement à deux couches comprenant une couche barrière et une couche d'émaillage (voir le brevet US 3 953 646) . La couche barrière est constituée d'un dépôt de silice fondue comprenant d'environ 80 à environ 90 % en poids de matière solide. Le revêtement est appliqué sur le substrat par pulvérisation. La couche barrière est cuite à une température d'environ 930 à environ 1370°C. La couche d'émaillage constituée de verre à haute teneur en silice, de verre de type borosilicate et d'un agent d'émittance est appliquée sur la couche barrière. L'agent d'émittance est choisi dans le groupe constitué par le carbure de silicium, les oxydes de chrome, de cobalt et de nickel, les spinelles au nickel-chrome, le nitrure de silicium et les oxydes mixtes calcinés de fer, de chrome et/ou de nickel. Le verre à haute teneur en silice (Corning Glass n° 7913) ne contient pas moins de 94 % en poids de SiO₂. Le verre de type borosilicate (Corning Glass n° 7740) a la composition suivante (en poids) 70 à 87 % de SiO₂, 10 à 20 % de B₂O₃, 2 à 5 % de Na₂O, 1 à 5 % de Al₂O₃.

Le composant vitreux à haute teneur en silice et le composant vitreux de type borosilicate sont utilisés dans un rapport en poids d'environ 3:1 à environ 19:1, et les composants vitreux (verre à haute teneur en silice et verre de type borosilicate) et l'agent d'émittance sont utilisés dans un rapport en poids allant de 50:1 à environ 4:1. Une barbotine aqueuse contenant d'environ 10 à environ 90 % en poids de revêtement d'émaillage est cuite à une température allant de 930 à environ 1370°C.

On connaît dans la technique (voir le brevet US 3 955 034) un revêtement à trois composants pour l'isolation de la silice, comprenant une couche barrière de silice, une couche d'émittance comprenant un composant vitreux à haute teneur en silice et un agent d'émittance choisi dans le groupe constitué par le carbure de silicium, l'oxyde de nickel, l'oxyde de chrome, l'oxyde de cobalt, une spinelle au nickel-chrome, le nitrure de silicium, des oxydes mixtes calcinés de fer, chrome et cobalt, avec un rapport en poids du verre à haute teneur en silice à l'agent d'émittance d'environ 50:1 à environ 4:1, et une couche de revêtement de l'émaillage constituée de verre à haute teneur en silice et de verre de type borosilicate, dans un rapport en poids du verre à haute teneur en silice au verre de type borosilicate d'environ 3:1 à environ 19:1. Le revêtement est cuit à une température allant de 930 à environ 1370°C.

Ces revêtements ne procurent ni une résistance aux chocs thermiques, ni une stabilité thermique de l'émittance suffisantes, et ils subissent un retrait.

Pour surmonter les problèmes évoqués ci-dessus, on a proposé un revêtement monocouche (voir le brevet US 4 093 771) qui est préparé en faisant réagir un composé choisi dans le groupe de substances constitué par le tétraborure de silicium, l'hexaborure de silicium, d'autres siliciures du bore, le bore et des mélanges de ces substances, avec un fritté de verre réactif composé de verre de type borosilicate poreux à haute teneur en silice, et d'oxyde de bore. Une mince couche de verre de type borosilicate est formée sur des particules finement divisées de verre à haute teneur en silice, ce qui améliore le frittage du revêtement sans accroissement important du coefficient de dilatation thermique.

Le fritté de verre réactif est avantageusement préparé en mélangeant environ 2 à 10 parties en poids d'oxyde de bore avec 100 parties en poids de verre de type borosilicate poreux à haute teneur en silice, tel que du verre Vycon® 7930. Le verre de type borosilicate à haute teneur en silice Vycon® 7930 présente une porosité d'approximativement 28 %. L'oxyde de bore est dissous dans 200 à 400 parties en poids d'eau déionisée. Le mélange est agité à environ 95°C, puis séché pendant une durée allant jusqu'à 24 heures, à une température de 75 à 95°C. Le fritté de verre résultant est dispersé, tamisé et cuit à 1150°C pendant 1 heure. Le composite fritté résultant est broyé pour donner une poudre et tamisé.

Une composition typique serait constituée de 97,5 % en poids de fritté de verre réactif contenant 5,5 % en poids d'oxyde de bore, combiné avec 2,5 % en poids de tétraborure de silicium composé de 63 ± 3 % en poids de silicium, 36 ± 3 % en poids de bore et moins de 0,2 % en poids de magnésium. La barbotine de revêtement est préparée en mélangeant des particules finement divisées de fritté de verre réactif et de tétraborure de silicium, avec un support tel que l'éthanol et un pré-liant tel que la méthylcellulose, avec une proportion en poids de composants solides de 35 à 50 %. Le mélange des composants de revêtement est broyé dans un broyeur à billes en alumine avec des billes d'alumine, pendant 3 à 12 heures. Le revêtement est appliqué par pulvérisation. Les échantillons revêtus sont séchés pendant 2 à 5 heures à des températures dans la gamme de 20 à environ 70°C. Après séchage, les échantillons revêtus sont émaillés dans un four pendant 1 heure 1/2 à 1215°C. Le revêtement présente une émittance d'environ 0,90 à 0,93 depuis la température ambiante jusqu'au-delà de 1260°C. Le coefficient de dilatation thermique est de 1,1.10⁻⁶ K⁻¹.

On connaît également un revêtement perfectionné de faible masse volumique pour la protection de matériaux poreux à base d'aluminosilicates qui a une température de service allant jusqu'à 1300°C. La composition du revêtement comprend 77,5 % en poids de fritté de verre réactif, 2,5 % en poids de tétraborure de silicium et 20 % en poids de disiliciure de molybdène. Le revêtement est formé sur le substrat à 1230°C pendant 1 heure 1/2 (voir : Advanced Porous Coating for low density Ceramic Insulation Materials, J. Amer. Ceram. Soc., vol. 72, n° 6, pages 1003-1010, 1989).

On connaît de plus un revêtement sur matériau céramique isolant comprenant 80 à 95 % en poids de verre de type aluminosilicate et 5 à 20 % en poids d'oxyde d'aluminium. Ce revêtement est formé en utilisant des techniques de revêtement par barbotine et de cuisson. Il est cuit à des températures de 1300 à 1350°C pendant 5 à 15 minutes. Aux températures allant jusqu'à 1300°C, le revêtement présente une faible résistance à l'érosion et a tendance à se fissurer [voir le certificat d'auteur SU 1 331 846 (classification : C O3 c 8/24) déposé le 21 juin 1985, publié le 23 août 1987 (bulletin n° 31) et ayant pour titre "Composition de revêtement"].

Les compositions de revêtement connues sont utilisées pour la protection de matériaux céramiques poreux ayant des températures de service de 1260°C à 1350°C. Actuellement, les matériaux céramiques ayant des températures de service allant jusqu'à 1500°C représentent un sujet intéressant pour les spécialistes. Les compositions de revêtement connues ne sont pas efficaces à ces températures : les revêtements obtenus sont cristallisés et fissurés.

Selon l'un de ses aspects, l'invention fournit un revêtement haute température, monocouche, sur substrat céramique, notamment poreux, caractérisé en ce qu'il comprend un fritté de gel d'émaillage à haute teneur en silice, de l'alumine et un agent d'émittance constitué de MoSi₂ ou Cr₂O₃, et a la composition en poids suivante :

| | |
|---|---|
| - fritté de gel : | 45 à 55 % ; |
| - MoSi₂ ou Cr₂O₃ : | 25 à 50 % ; |
| - Al₂O₃ : | 5 à 20 %. |

Le matériau céramique utilisé comme substrat comprend en général un ou plusieurs composés choisis dans le groupe constitué par Al₂O₃, SiO₂, ZrO₂, SiC et Si₃N₄.

Le fritté de gel d'émaillage à haute teneur en silice est préparé en utilisant une technologie sol-gel et a de préférence la composition en poids suivante :

| | |
|---|---|
| - SiO₂ : | 88 à 98 % ; |
| - B₂O₃ : | 2 à 12 %. |

La teneur en Fe₂O₃ et la teneur en Na₂O dans le fritté de gel sont en général d'environ 1.10⁻⁴ à environ 1.10⁻⁵ % en poids.

Ces teneurs en Fe₂O₃ et Na₂O dans la composition du fritté de gel lui assurent une température de ramollissement élevée et une faible tendance à cristalliser, ce qui permet d'utiliser le fritté de gel comme matrice pour un revêtement ayant une température de service allant jusqu'à 1500°C.

L'utilisation de moins de 45 % en poids de fritté de gel a pour conséquence une diminution de la température de ramollissement et de la résistance aux chocs thermiques du revêtement.

Un revêtement comprenant plus de 55 % en poids de fritté de gel n'assure pas une émittance suffisante.

L'utilisation d'alumine (Al₂O₃) accroît la tenue en température du revêtement.

L'utilisation de MoSi₂ ou Cr₂O₃ a pour conséquence une émittance élevée à la température de 1500°C. De plus, l'addition de ces composants à une composition de revêtement a pour conséquences un accroissement du coefficient de dilatation thermique et une diminution de la contrainte résiduelle dans le revêtement, ce qui permet d'améliorer sa tenue en température. L'utilisation de plus de 50 % en poids de ces additifs a pour conséquence une diminution de la résistance aux chocs thermiques du revêtement, et l'utilisation de moins de 25 % en poids de ces additifs a pour effet une diminution de l'émittance du revêtement.

Avantageusement, la teneur de l'agent d'émittance en particules de taille inférieure à 5 µm est d'environ 60 à environ 80 % en poids de cet agent. Si la teneur en particules d'agent d'émittance ayant une taille inférieure à 5 µm est de plus de 80 % en poids ou de moins de 60 % en poids, l'agent est distribué de façon aléatoire à travers la matrice vitreuse, ce qui a pour effet que la tenue en température du revêtement diminue.

La pénétration du revêtement dans le substrat, notamment poreux, confère une adhérence élevée.

En général, une couche densifiée ayant une épaisseur de 70 à 140 µm et une masse volumique maximale de 800 kg/m³ (0,8 g/cm³) est formée sur le substrat. Le revêtement est appliqué sur le substrat par pulvérisation, au moyen d'air comprimé, avantageusement à une pression de 0,8.10⁵ à 1,1.10⁵ Pa (0,8 à 1,1 atm).

Le rapport en poids de la phase de suspension (poudre de revêtement) au milieu de dispersion (de préférence eau distillée) est de 1:1 à 1:5. Une teneur en milieu de dispersion, notamment en eau, élevée conduit à une composition chimique du revêtement non uniforme, tandis qu'une faible teneur en ce milieu conduit à une diminution de l'adhérence entre le revêtement et le substrat.

Le revêtement est appliqué sur la surface du substrat préalablement préparée par dépoussiérage du feutre formant le substrat, pour une meilleure adhérence.

Selon un autre de ses aspects, l'invention a donc pour objet un procédé pour munir un substrat céramique, notamment poreux, d'un revêtement tel que défini ci-dessus, caractérisé en ce qu'il comprend essentiellement les étapes consistant à :
- préparer une barbotine d'une poudre constituée de 45 à 55 % en poids de fritté de gel d'émaillage à haute teneur en silice, 25 à 50 % en poids d'agent d'émittance, MoSi₂ ou Cr₂O₃ et 5 à 20 % en poids d'alumine, dans un milieu de dispersion compatible, de préférence de l'eau distillée, avec un rapport en poids de la poudre au milieu de dispersion de 1:1 à 1:5 ;
- appliquer cette barbotine, par pulvérisation sous pression, sur le substrat céramique à revêtir ayant subi un traitement de préparation ;
- sécher la couche ainsi obtenue et la cuire à une température de 1300 à 1500°C, pendant 15 à 90 minutes.

Le séchage s'effectue en général à environ 20°C pendant environ 30 minutes, puis à une température de 80 à 100°C pendant environ 2 heures.

Les exemples qui suivent sont destinés à illustrer et mieux expliquer l'invention.

### Exemple 1 :

On prépare un revêtement en utilisant des techniques de revêtement par barbotine et de cuisson.

Le fritté de gel utilisé est broyé dans un broyeur en alumine avec des billes d'alumine pendant 25 heures, pour obtenir une poudre ayant une surface spécifique de 1 m²/g, et tamisé. De la poudre de MoSi₂ est broyée dans un broyeur métallique à billes métalliques, renfermant de l'alcool isopropylique, pendant 30 heures, puis tamisée.

45 parties en poids de fritté (comprenant 88 % en poids de SiO₂ et 1.10⁻⁴ % en poids de Fe₂O₃ et de Na₂O), 50 parties en poids de MoSi₂ (comprenant 65 % en poids de particules ayant une taille inférieure à 5 µm) et 5 parties en poids de Al₂O₃ sont mélangées dans un récipient en polyéthylène, pendant 40 heures.

Une quantité pesée de poudre est diluée avec de l'eau distillée, dans le rapport en poids de 1:2. Le revêtement est appliqué par pulvérisation, à une pression d'air de 0,8.10⁵ Pa (0,8 atm), sur la surface préparée à l'avance, par dépoussiérage, pour recevoir un revêtement, d'un matériau à base d'Al₂O₃. On forme une couche densifiée ayant une épaisseur de 70 µm. Le revêtement est séché à l'air, à 20°C, pendant 30 minutes, puis séché au four, à 80°C, pendant 2 heures. Le revêtement est cuit à 1300°C pendant 90 minutes.

### Exemple 2 :

Un revêtement comprenant 45 parties en poids de fritté de gel à haute teneur en silice comprenant 12 % en poids de B₂O₃, 50 parties en poids de Cr₂O₃ et 5 parties en poids de Al₂O₃ est appliqué, selon le processus de l'exemple 1, sur un substrat à base de ZrO₂. Le rapport en poids poudre : eau est de 1:5 et la pression de l'air est de 1,1.10⁵ Pa (1,1 atm). On dépose une couche densifiée ayant une épaisseur de 140 µm.

### Exemple 3 :

Un revêtement comprenant 55 parties en poids de fritté de gel à haute teneur en silice (contenant 98 % en poids de SiO₂ et 1.10⁻⁵ % en poids de Fe₂O₃, Na₂O), 30 parties en poids de MoSi₂ (contenant 75 % en poids de particules ayant une taille inférieure à 5 µm) et 15 parties en poids de Al₂O₃ est appliqué, selon le processus de l'exemple 1, sur un substrat à base de SiO₂. Le rapport en poids poudre : eau est de 1:3 et la pression de l'air de 1.10⁵ Pa (1 atm). On dépose sur le substrat une couche densifiée ayant une épaisseur de 100 µm. Le revêtement est cuit à la température de 1500°C, pendant 15 minutes.

### Résultats :

Les compositions de revêtement obtenues sont soumises à un essai de tenue en température, sur une gamme de température de 20°C ⇄ 1500°C ⇄ 20°C pendant 30 minutes. Le nombre de cycles est 2. Le coefficient de dilatation thermique est de 2,3.10⁻⁶ K⁻¹ et l'émittance n'est pas inférieure à 0,86.

## Revendications

1. Revêtement haute température, monocouche, sur substrat céramique, notamment poreux, caractérisé en ce qu'il comprend un fritté de gel d'émaillage à haute teneur en silice, de l'alumine et un agent d'émittance constitué de MoSi₂ ou Cr₂O₃, et a la composition en poids suivante :
| | |
|---|---|
| - fritté de gel : | 45 à 55 % ; |
| - MoSi₂ ou Cr₂O₃ : | 25 à 50 % ; |
| - Al₂O₃ : | 5 à 20 %. |

2. Revêtement selon la revendication 1, caractérisé en ce que le fritté de gel d'émaillage à haute teneur en silice présente la composition en poids suivante :
| | | | |
|---|---|---|---|
| SiO₂ : | 88 à 98 % ; | B₂O₃ : | 2 à 12 %. |

3. Revêtement selon la revendication 1 ou 2, caractérisé en ce que le fritté de gel comprend d'environ 1.10⁻⁴ à environ 1.10⁻⁵ % en poids de Fe₂O₃ et d'environ 1.10⁻⁴ à environ 1.10⁻⁵ % en poids de Na₂O.

4. Revêtement selon l'une quelconque des revendications 1 à 3, caractérisé en ce qu'il se présente sous forme d'une couche densifiée ayant une épaisseur de 70 à 140 µm et une masse volumique maximale de 0,8 g/cm³.

5. Procédé pour munir un substrat céramique, notamment poreux, d'un revêtement selon l'une quelconque des revendications 1 à 4, caractérisé en ce qu'il comprend essentiellement les étapes consistant à :
- préparer une barbotine d'une poudre constituée de 45 à 55 % en poids de fritté de gel d'émaillage à haute teneur en silice, 25 à 50 % en poids d'agent d'émittance, MoSi₂ ou Cr₂O₃ et 5 à 20 % en poids d'alumine, dans un milieu de dispersion compatible, de préférence de l'eau distillée, avec un rapport en poids de la poudre au milieu de dispersion de 1:1 à 1:5 ;
- appliquer cette barbotine, par pulvérisation sous pression, sur le substrat céramique à revêtir ayant subi un traitement de préparation ;
- sécher la couche ainsi obtenue et la cuire à une température de 1300 à 1500°C, pendant 15 à 90 minutes.

6. Procédé selon la revendication 5, caractérisé en ce que le substrat céramique comprend un ou plusieurs composés choisis dans le groupe constitué par Al₂O₃, SiO₂, ZrO₂, SiC et Si₃N₄.

7. Procédé selon la revendication 5 ou 6, caractérisé en ce que l'agent d'émittance présente une teneur d'environ 60 à environ 80 % en poids de particules dont la taille est inférieure à 5 µm.

8. Procédé selon l'une quelconque des revendications 5 à 7, caractérisé en ce que la couche de revêtement est appliquée sous une pression d'air de 0,8.10⁵ à 1,1.10⁵ Pa.

## Claims

1. Single-layer, high temperature coating on a ceramic substrate, in particular a porous one, characterized in that it comprises a high silica glaze gel frit, alumina and an emissivity agent consisting of MoSi₂ or Cr₂O₃, and has the following composition by weight:
| | |
|---|---|
| - gel frit: | 45 to 55%; |
| - MoSi₂ or Cr₂O₃: | 25 to 50%; |
| - Al₂O₃: | 5 to 20%. |

2. Coating according to claim 1, characterized in that the high silica glaze gel frit has the following composition by weight:
| | | | |
|---|---|---|---|
| SiO₂: | 88 to 98%; | B₂O₃: | 2 to 12%. |

3. Coating according to claim 1 or 2, characterized in that the gel frit comprises from approximately 1.10⁻⁴ to approximately 1.10⁻⁵ weight % of Fe₂O₃ and from approximately 1.10⁻⁴ to approximately 1.10⁻⁵ weight % of Na₂O.

4. Coating according to any one of claims 1 to 3, characterized in that it takes the form of a densified layer having a thickness of 70 to 140 µm and a maximum density of 0.8 g/cm³.

5. Process for providing a ceramic substrate, in particular a porous one, with a coating according to any one of claims 1 to 4, characterized in that it essentially comprises the steps of:
- preparing a slurry from a powder consisting of 45 to 55 weight % of high silica glaze gel frit, 25 to 50 weight % of emissivity agent, MoSi₂ or Cr₂O₃ and 5 to 20 weight % of alumina, in a compatible dispersion medium, preferably distilled water, with a weight ratio of powder to dispersion medium of from 1:1 to 1:5;
- applying this slurry, by spraying under pressure, to the ceramic substrate to be coated, which has undergone a preparatory treatment;
- drying the layer thus obtained and firing it at a temperature of 1300 to 1500°C, for 15 to 90 minutes.

6. Process according to claim 5, characterized in that the ceramic substrate comprises one or more compounds selected from the group formed by Al₂O₃, SiO₂, ZrO₂, SiC and Si₃N₄.

7. Process according to claim 5 or 6, characterized in that the emissivity agent has a content of approximately 60 to approximately 80 weight % of particles the size of which is less than 5 µm.

8. Process according to any one of claims 5 to 7, characterized in that the coating layer is applied at an air pressure of 0.8·10⁵ to 1.1·10⁵ Pa.

## Patentansprüche

1. Hochtemperatur-Einzelschichtüberzug auf keramischem, insbesondere porösem Substrat, dadurch gekennzeichnet, daß er ein zum Emaillieren bestimmtes Sintergel mit hohem Kieselerde-Gehalt, Aluminiumoxid und ein Abstrahlungsmittel aus MoSi₂ oder Cr₂O₃ umfaßt und die folgende Zusammensetzung in Gew.-% aufweist:
| | |
|---|---|
| - Sintergel: | 45 - 55%; |
| - MoSi₂ oder Cr₂O : | 25 - 50%; |
| -Al₂O₃ : | 5 - 20%. |

2. Überzug nach Anspruch 1, dadurch gekennzeichnet, daß das zum Emaillieren bestimmte Sintergel mit hohem Kieselerde-Gehalt die folgende Zusammensetzung in Gew.-% aufweist:
| | | | |
|---|---|---|---|
| SiO₂ : | 88 - 98%; | B₂O₃ : | 2 - 12%. |

3. Überzug nach Anspruch 1 oder 2, dadurch gekennzeichnet, daß das Sintergel ungefähr 1·10⁻⁴ bis ungefähr 1·10⁻⁵ Gew.-% an Fe₂O₃ und ungefähr 1·10⁻⁴ bis ungefähr 1·10⁻⁵ Gew.-% Na₂O umfaßt.

4. Überzug nach einem der Ansprüche 1 bis 3, dadurch gekennzeichnet, daß er in Form einer verdichteten Schicht mit einer Dicke von 70 bis 140 µm und einer maximalen Dichte von 0,8 g/cm³ vorliegt.

5. Verfahren zum Auftragen eines Überzugs nach einem der Ansprüche 1 bis 4 auf ein keramisches, insbesondere poröses Substrat, dadurch gekennzeichnet, daß es insbesondere die folgenden Schritte umfaßt:
- Herstellen eines Schlickers aus einem Pulver, das zusammengesetzt ist aus 45 bis 55 Gew.-% zum Emaillieren bestimmten Sintergel mit hohem Kieselerde-Gehalt, 25 - 50 Gew.-% MoSiO₂- oder Cr₂O₃-Abstrahlungsmittel und 5 - 20 Gew.-% Al₂O₃, in einem kompatiblen Dispersionsmedium, vorzugsweise aus destilliertem Wasser, mit einem Gewichtsverhältnis von Pulver zu Dispersionsmedium von 1:1 bis 1:5;
- Auftragen dieses Schlickers auf das zu überziehende, einer Vorbehandlung unterzogene keramische Substrat mittels Druckzerstäubung;
- Trocknen der so erhaltenen Schicht und Einbrennen bei einer Temperatur von 1300 bis 1500°C wahrend 15 bis 90 Minuten.

6. Verfahren nach Anspruch 5, dadurch gekennzeichnet, daß das keramische Substrat eine oder mehrere Komponenten, ausgewählt aus der Gruppe Al₂O₃, SiO₂, ZrO₂, SiC und Si₃N₄ umfaßt.

7. Verfahren nach Anspruch 5 oder 6, dadurch gekennzeichnet, daß das Abstrahlungsmittel einen Gehalt von ungefähr 60 bis ungefähr 80 Gew.-% an Teilchen mit einem Durchmesser unter 5 µm aufweist.

8. Verfahren nach einem der Ansprüche 5 bis 7, dadurch gekennzeichnet, daß die Überzugsschicht unter einem Luftdruck von 0,8·10⁵ bis 1,1·10⁵ Pa aufgetragen wird.
